# EUROPEAN PATENT SPECIFICATION

(11) **EP 2 517 812 B1**
(45) Date of publication and mention of the grant of the patent: **31.12.2014**
(21) Application number: 11161167.9
(22) Date of filing: 05.04.2011
(51) Int. Cl.: B23B 51/02

(54) **A cutting head comprising a drill tip and a drill having such a cutting head**
Schneidkopf mit einer Bohrerspitze und Bohrer mit einem derartigen Schneidkopf
Tête de coupe comportant une pointe de mèche et foret doté d'une telle tête de coupe

(43) Date of publication of application: 31.10.2012
(73) Proprietor: SECO TOOLS AB (publ), 737 82 Fagersta (SE)
(72) Inventor: Jönsson, Kenth-Ove, 602 15, Norrköping (SE); Wikström, Tommy, 585 62, Linghem (SE)
(74) Representative: Hammarsjö, Joakim

(56) References cited:
- EP-A1- 2 266 737
- EP-A2- 2 266 738
- WO-A1-2006/046227
- WO-A1-2009/128775

## Description

### TECHNICAL FIELD OF THE INVENTION AND BACKGROUND ART

The present invention relates to a cutting head comprising a drill tip, the drill tip comprising:
- a chisel edge,
- at least two main cutting edges, each main cutting edge extending between a central end at said chisel edge and an outer end, and
- a recess associated with each main cutting edge and located at each side of the chisel edge,
as well as a twist drill having such a cutting head.

A replaceable cutting head detachably attachable to a tool body in the form of a shank of a drill according to the preamble of claim 1, is shown in for example WO 2009/128775 A1, and cutting heads being an integral part of a drill are known.

Such a cutting head is used for drilling holes in steel and similar hard material and preferably made of hard metal, such as cemented tungsten carbide. The invention is not restricted to any particular dimensions of such cutting heads, but such cutting heads are usually used to drill holes with a diameter of 8-32 mm.

Furthermore, the cutting head has normally two said main cutting edges, but the number of cutting edges may just as well be for instance 3 or 4.

The chisel edge of such a cutting head is formed at the leading end of the cutting head, and it will rather than performing a substantial cutting function merely push work piece material cut by the main cutting edges ahead of it in the direction of rotation. The longer the chisel edge the larger the power consumption and torque necessary to move the drill tip through a work piece, which is the reason of arranging a said recess associated with each main cutting edge, so that the length of the chisel edge at the drill tip is reduced. Such a recess may therefor also be called or produce a thinning. Thus, the arrangement of such recesses tends to reduce power and torque consumption by the chisel edge.

There is of course an ongoing attempt to further reduce such consumption of power and torque when drilling with such a cutting head. Furthermore, the drilling will result in crater wear and flank wear of the cutting head restricting the lifetime thereof. The forces necessary to apply on the work piece through said main cutting edges for drilling through a work piece have also an influence upon said lifetime.

### SUMMARY OF THE INVENTION

The object of the present invention is to provide a cutting head of the type defined in the introduction being improved in at least some aspect with respect to such cutting heads already known.

This object is according to the invention, as described in claim 1, obtained by providing each said recess of such a cutting head with a chip breaking groove extending along the main cutting edge but spaced from the main cutting edge by a distance.

Such a chip breaking groove arranged at a distance from the main cutting edge will act as a natural crater, which results in an increased chip angle in the recess (thinning) where the chip angle is small, so that the chips cut may be better shaped and by that the cutting forces may be reduced. Besides a reduced consumption of power and torque when drilling this will result in less production of heat and also less strains upon the cutting edges, which all together results in a prolonged lifetime of the cutting head. By arranging said chip breaking groove spaced from the main cutting edge by a distance these advantages may be achieved without weakening the main cutting edge in question or the chisel edge.

According to an embodiment of the invention said distance of the chip breaking groove to the main cutting edge is 0.01-0.5 mm, preferably 0.05-0.3 mm. This is a suitable distance for obtaining a desired change of said chip angle resulting in the advantages mentioned above while ensuring that the main cutting edge and the chisel edge are not detrimentally weakened.

According to another embodiment of the invention each said recess is defined by a radius which is larger than said distance. This will have a positive influence upon the efforts to reduce consumption of power when drilling in a work piece by said cutting edge.

According to another embodiment of the invention each said chip breaking groove and said main cutting edge make in a direction towards said chisel edge an angle of 0°-15° with each other. This relationship between the extensions of the chip breaking groove and the main cutting edge has a positive influence upon the ability of the chip breaking groove to reduce cutting forces of the main cutting edge by assisting this to better shape chips cut thereby.

According to another embodiment of the invention being a further development of the embodiment last mentioned said angle is ≥ 2° or ≥ 5°. Accordingly, the chip breaking groove and the main cutting edge associated therewith converge in the direction towards said chisel edge, and said distance between them defined in an embodiment of the invention is then the shortest distance therebetween, i.e. close to said chisel edge.

According to another embodiment of the invention each said chip breaking groove has a depth of 0.05-1 mm, preferably 0.05-0.5 mm. This is a suitable depth for a chip breaking groove of a cutting head according to the present invention.

According to another embodiment of the invention each said chip breaking groove has a width of 0.5-3 mm, preferably 1.0-2.0 mm. This is a suitable width of said chip breaking groove resulting in a favourable breaking of chips cut by the associated main cutting edge.

The invention also relates to a twist drill comprising a cutting head according to the present invention, and the function and advantages thereof appear clearly from the above disclosure of the different embodiments of a cutting head according to the present invention.

Further advantages as well as advantageous features of the invention will appear from the following description.

### BRIEF DESCRIPTION OF THE DRAWINGS

With reference to the appended drawings, below follows a specific description of embodiments of the invention cited as examples.

In the drawings:
- Fig 1: is a side elevation of a twist drill according to an embodiment of the present invention,
- Fig 2: is a view of a cutting head according to a first embodiment of the invention being a part of the twist drill shown in Fig 1,
- Fig 3: is a top plan view of the cutting head according to Fig 2,
- Fig 4: is a cross-section view according to the line IV-IV in Fig 3 with the ship breaking groove in an enlarged view, and
- Fig 5: is a perspective view of a twist drill according to a second embodiment of the invention with the drill tip thereof in an enlarged view.

### DETAILED DESCRIPTION OF EMBODIMENTS OF THE INVENTION

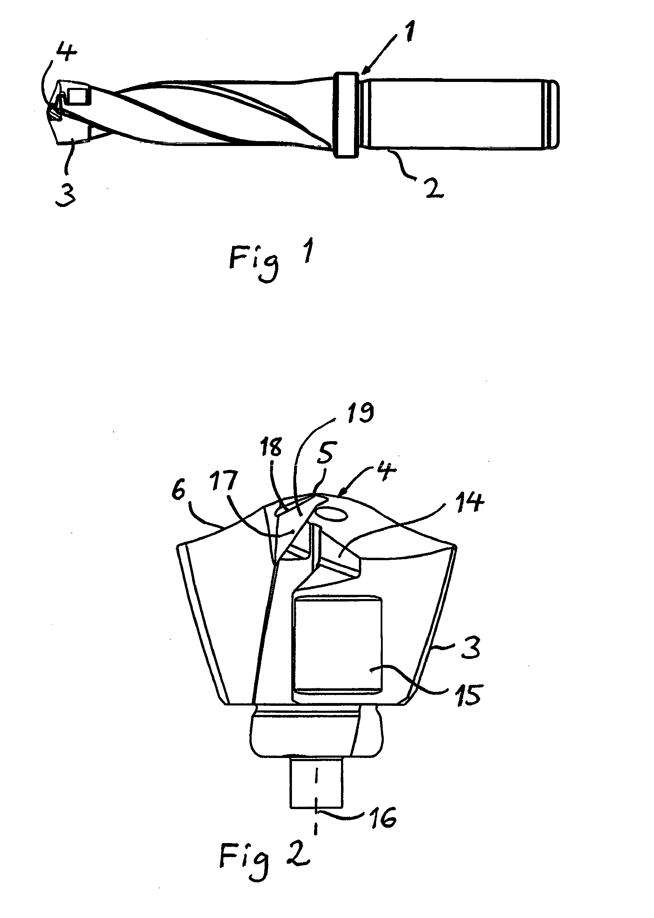

A twist drill 1 according to a first embodiment of the invention having a shank 2 and a cutting head 3 with a drill tip 4 is shown in Fig 1. The cutting head is in this embodiment of the invention removably attached to the shank, for instance as disclosed in WO 2009/128775 A1, which is incorporated herein by reference.

The cutting head 3 of the twist drill in Fig 1 will now be disclosed more in detail while making reference to Figs 2-4. The cutting head has a chisel edge 5 and two main cutting edges 6, 7 each extending between a central end 8, 9 at the chisel edge 5 and an outer end 10, 11.

Each main cutting edge forms one border of a flank 12, 13. The chisel edge 5 may be formed by the intersection of the flanks. A shoulder 14 is provided on the heel side of each flank opposite to the respective main cutting edge and is used to assist in preventing axial displacement of the cutting head from the shank of the twist drill when the cutting head is attached to the shank as shown in Fig 1. The cutting head may comprise means for constituting a part of a quick coupling such as a bayonet coupling. Generally, two-piece drills are less exact in for example radial run-out and therefore it is of great importance for their stability that the chip formation is favourable. Flat surfaces 15 directed perpendicularly to the intended axis of rotation 16 of the cutting head are arranged for tightening and loosening the cutting head with respect to the shank for establishing and breaking a bayonet-type coupling there-between.
A recess 17 is associated with each main cutting edge and located at each side of the chisel edge. The recess 17 slopes generally axially rearwardly. These recesses result in a thinning of the flank 12, 13 in the region of the chisel edge, which is favourable, since the smaller the flank and the chisel edge, the less power consumption and torque necessary to move the drill tip through a work piece.

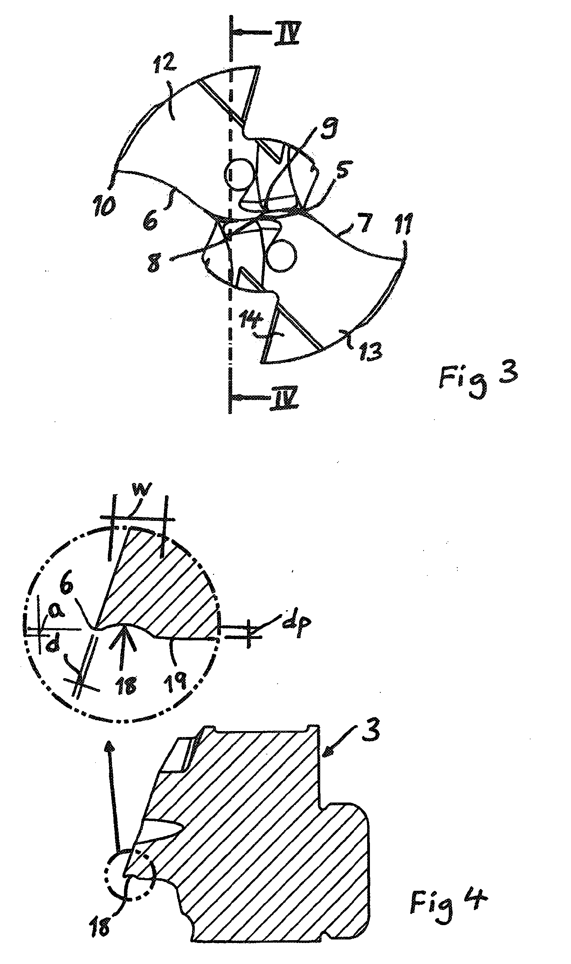

The cutting head according to the invention has a chip breaking groove 18 arranged in each said recess 17 in a wall 19 thereof connecting the recess to the main cutting edge and the chisel edge. The main cutting edge 6 may be spaced a distance a from a plane of the wall 19. The chip breaking groove 18 extends along the main cutting edge spaced from the main cutting edge by a distance d (see Fig 4). This distance is 0.01-0.5 mm, preferably 0.05-0.3 mm, where it is shortest. The distance may vary, since the chip breaking groove and the main cutting edge may in a direction towards said chisel edge make an angle of 0°-15° with each other, and it is advantageous when this angle is ≥ 2° or ≥ 5°, so that the main cutting edge and the chip breaking groove will then converge slightly towards the chisel edge. The chip breaking groove has a depth dp of 0.05-1 mm, preferably 0.05-0.5 mm, and a width w of 0.5-3 mm, preferably 1.0-2.0 mm. Said distance d will ensure that the main cutting edge and the chisel edge are not weakened by the presence of the chip breaking groove. As already explained the chip breaking groove 18 will when drilling through a work piece result in an increased or more positive chip angle reducing the cutting forces and by that lowering the heat generation and thus prolonging the lifetime of the respective main cutting edge and by that of the cutting head.

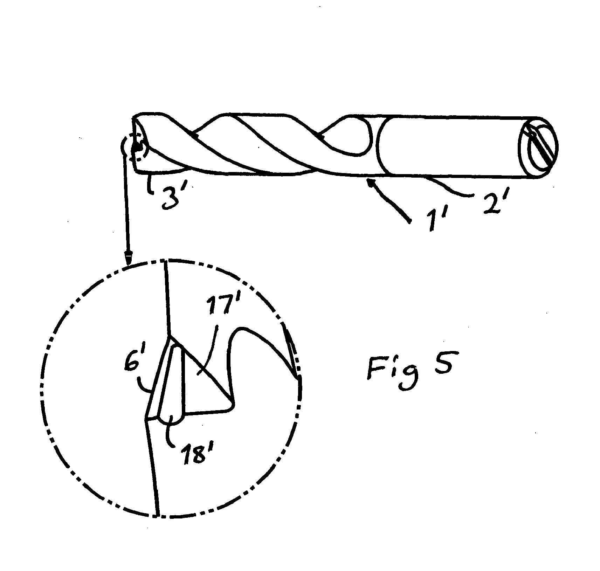

Fig 5 illustrates a twist drill 1' according to a second embodiment of the invention, which differs from the above-mentioned cutting head in that the cutting head 3' and the shank 2' are integral parts of the twist drill. A chip breaking groove 18' is arranged in each recess 17' of this cutting head and extends along and at a distance from the respective main cutting edge 6'.

The cutting head is preferably made of sintered boron nitride (BN) especially of cubic boron nitride (CBN), but it may also be of polycrystalline boron nitride (PCBN). However, the invention should not be restricted to the use of this material for the cutting head, but other materials suited for such cutting heads, such as sintered cemented carbide, are conceivable. The cutting head may be coated with one or more layers, such as Al₂O₃, TiN, etc.

The invention is of course not in any way restricted to the embodiments described above, but many possibilities to modifications thereof will be apparent to a person with ordinary skill in the art without departing from the scope of the invention as defined in the appended claims.

## Claims

1. A cutting head comprising a drill tip (4), the drill tip comprising:
• a chisel edge (5),
• at least two main cutting edges (6, 7, 6'), each main cutting edge extending between a central end (8, 9) at said chisel edge and an outer end (10, 11), and
• a recess (17, 17') associated with each main cutting edge
and located at each side of the chisel edge,
***characterized* in that** each said recess (17, 17') comprises a chip breaking groove (18, 18') extending along the main cutting edge (6, 6', 7) spaced from the main cutting edge by a distance (d).

2. A cutting head according to claim 1, ***characterized* in that** said distance (d) is 0.01 - 0.5 mm, preferably 0.05 - 0.3 mm.

3. A cutting head according to claim 1 or 2, ***characterized* in that** each said recess (17, 17') is defined by a radius which is larger than said distance (d).

4. A cutting head according to any of the preceding claims, ***characterized* in that** each said chip breaking groove (18, 18') and said main cutting edge (6, 6', 7) make an angle of 0° - 15° with each other in a direction towards said chisel edge (5).

5. A cutting head according to claim 4, ***characterized* in that** said angle is ≥ 2° or ≥ 5°.

6. A cutting head according to any of the preceding claims, ***characterized* in that** each said chip breaking groove (18, 18') has a depth (dp) of 0.05 - 1 mm, preferably 0.05 - 0.5 mm.

7. A cutting head according to any of the preceding claims, ***characterized* in that** each said chip breaking groove (18, 18') has a width (w) of 0.5 - 3 mm, preferably 1.0 - 2.0 mm.

8. A cutting head according to any of the preceding claims, ***characterized* in that** it comprises means for constituting a part of a quick coupling, such as a bayonet coupling.

9. A twist drill comprising a cutting head (3, 3') according to any of claims 1-8.

10. A twist drill according to claim 9, ***characterized* in that** it comprises a shank (2) to which the cutting head (3) is removably attachable.

11. A twist drill according to claim 10, ***characterized* in that** the shank comprises means for constituting a part of a quick coupling, such as a bayonet coupling.

## Patentansprüche

1. Schneidkopf mit einer Bohrspitze (4), wobei die Bohrspitze:
- eine Meißelkante bzw. Querschneide (5),
- zumindest zwei Hauptschneidkanten (6, 7, 6'), wobei sich jede Hauptschneidkante zwischen einem zentralen Ende (8, 9) an der Querschneide und einem äußeren Ende (10, 11) erstreckt, und
- eine jeder Hauptschneidkante zugeordnete und an jeder Seite der Querschneide angeordnete Aussparung bzw. Ausspitzung (17, 17'), aufweist, **dadurch gekennzeichnet, dass** jede Ausspitzung (17, 17') eine spanbrechende Nut (18, 18') aufweist, die sich entlang der Hauptschneidkante (6, 6', 7) und in einem Abstand (d) von der Hauptschneidkante erstreckt.

2. Schneidkopf nach Anspruch 1, **dadurch gekennzeichnet, dass** der Abstand (d) 0,01-0,5 mm, vorzugsweise 0,05-0,3 mm ist.

3. Schneidkopf nach einem der Ansprüche 1 oder 2, **dadurch gekennzeichnet, dass** jede der Ausspitzungen (17, 17') durch einen Radius definiert ist, der größer als der Abstand (d) ist.

4. Schneidkopf nach einem der vorangehenden Ansprüche, **dadurch gekennzeichnet, dass** jede der spanbrechenden Nuten (18, 18') und die Hauptschneidkante (6, 6', 7) in Richtung zu der Querschneide (5) gesehen einen Winkel von 0°-15° miteinander einschließen.

5. Schneidkopf nach Anspruch 4, **dadurch gekennzeichnet, dass** der Winkel ≥2° oder ≥5° ist.

6. Schneidkopf nach einem der vorangehenden Ansprüche, **dadurch gekennzeichnet, dass** jede der spanbrechenden Nuten (18, 18') eine Tiefe (dp) von 0,05-1 mm, vorzugsweise 0,05-0,5 mm hat.

7. Schneidkopf nach einem der vorangehenden Ansprüche, **dadurch gekennzeichnet, dass** jede der spanbrechenden Nuten (18, 18') eine Breite (w) von 0,5-3 mm, vorzugsweise 1,0-2,0 mm hat.

8. Schneidkopf nach einem der vorangehenden Ansprüche, **dadurch gekennzeichnet, dass** er Mittel zum Bilden eines Teils einer Schnellkupplung, wie zum Beispiel eines Bajonettverschlusses, aufweist.

9. Spiralbohrer mit einem Schneidkopf (3, 3') nach einem der Ansprüche 1 bis 8.

10. Spiralbohrer nach Anspruch 9, **dadurch gekennzeichnet, dass** er einen Schaft (2) aufweist, an dem der Schneidkopf (3) lösbar befestigbar ist.

11. Spiralbohrer nach Anspruch 10, **dadurch gekennzeichnet, dass** der Schaft Mittel zum Bilden eines Teils einer Schnellkupplung, wie zum Beispiel eines Bajonettverschlusses, aufweist.

## Revendications

1. Tête de coupe comprenant une pointe de mèche (4), la pointe de mèche comprenant :
• une arête transversale (5),
• au moins deux arêtes de coupe principales (6, 7, 6'), chaque arête de coupe principale s'étendant entre une extrémité centrale (8, 9) au niveau de ladite arête transversale et une extrémité extérieure (10, 11), et
• un évidement (17, 17') associé à chaque arête de coupe principale et situé
des deux côtés de l'arête transversale,
**caractérisée en ce que** chaque évidement (17, 17') comprend une rainure brise-copeau (18, 18') s'étendant le long de l'arête de coupe principale (6, 6', 7) écartée de l'arête de coupe principale par une distance (d).

2. Tête de coupe selon la revendication 1, **caractérisée en ce que** ladite distance (d) est de 0,01 à 0,5 mm, de préférence de 0,05 à 0,3 mm.

3. Tête de coupe selon la revendication 1 ou 2, **caractérisée en ce que** chaque dit évidement (17, 17') est défini par un rayon qui est plus grand que ladite distance (d).

4. Tête de coupe selon l'une quelconque des revendications précédentes, **caractérisée en ce que** chaque dite rainure brise-copeau (18, 18') et ladite arête de coupe principale (6, 6', 7) forment un angle de 0° à 15° l'une par rapport à l'autre dans une direction vers ladite arête transversale (5).

5. Tête de coupe selon la revendication 4, **caractérisée en ce que** ledit angle est ≥2° ou ≥5°.

6. Tête de coupe selon l'une quelconque des revendications précédentes, **caractérisée en ce que** chaque dite rainure brise-copeau (18, 18') a une profondeur (dp) de 0,05 à 1 mm, de préférence de 0,05 à 0,5 mm.

7. Tête de coupe selon l'une quelconque des revendications précédentes, **caractérisée en ce que** chaque dite rainure brise-copeau (18, 18') a une largeur (w) de 0,5 à 3 mm, de préférence de 1,0 à 2,0 mm.

8. Tête de coupe selon l'une quelconque des revendications précédentes, **caractérisée en ce qu'**elle comprend un moyen pour constituer une partie d'une fixation rapide, telle qu'une fixation à baïonnette.

9. Foret hélicoïdal comprenant une tête de coupe (3, 3') selon l'une quelconque des revendications 1 à 8.

10. Foret hélicoïdal selon la revendication 9, **caractérisé en ce qu'**il comprend une queue (2) à laquelle la tête de coupe (3) peut être fixée de façon amovible.

11. Foret hélicoïdal selon la revendication 10, **caractérisé en ce que** la queue comprend un moyen pour constituer une partie d'une fixation rapide, telle qu'une fixation à baïonnette.
